# EUROPEAN PATENT SPECIFICATION

(11) **EP 3 388 293 B1**
(45) Date of publication and mention of the grant of the patent: **18.03.2020**
(21) Application number: 17461523.7
(22) Date of filing: 14.04.2017
(51) Int. Cl.: B60S 1/52

(54) **MOVEMENT TRANSMISSION DEVICE FOR VEHICLE WIPER DEVICE**
BEWEGUNGSÜBERTRAGUNGSVORRICHTUNG FÜR EINE FAHRZEUGWISCHERVORRICHTUNG
DISPOSITIF DE TRANSMISSION DE MOUVEMENT POUR DISPOSITIF D'ESSUIE-GLACE DE VÉHICULE

(43) Date of publication of application: 17.10.2018
(73) Proprietor: Valeo Autosystemy SP. Z.O.O., 32-050 Skawina (PL)
(72) Inventor: HENDZEL, Lukasz, 32-050 Skawina (PL); MACHACZ, Roman, 32-050 Skawina (PL)
(74) Representative: Valeo Systèmes d'Essuyage

(56) References cited:
- DE-A1- 19 744 906
- US-A- 6 044 518

## Description

### TECHNICAL FIELD OF THE INVENTION

The present invention relates to a movement transmission device for a vehicle wiper device.

Movement transmission devices for vehicle wiper devices are generally known. Wiper devices are used for wiping a windscreen of a vehicle, in particular a windscreen of a car. The movement transmission device transfers a drive from a motor of a vehicle wiper device to a wiper arm for wiping a windscreen of a vehicle. A rubber wiper blade is attached to the wiper arm for wiping over the surface of the windscreen to be wiped. However, the invention is not limited to be used with cars but also to be used with trucks, trains and other vehicles where significant forces affect the wiper arm (forces coming from high speed of vehicle or large amounts of air flowing).

### STATE OF THE ART

A movement transmission device provides a reciprocating movement of the wiper arm and wiper blade attached thereon, to cause wiping windscreen of a vehicle. The reciprocating movement means that the wiper arm with wiper blade performs reciprocating movement between a normal position of the wiper arm, which is also a rest position of the wiper arm, and a maximum deflected position of the wiper arm. When the reciprocating movement between the two positions is performed, the movement transmission device operates smoothly, without being damaged or blocked.

The movement transmission device comprises a crank pivotally connected with a link rod. The reciprocating movement of the wiper blade is provided by reciprocating linear movement of the link rod with the crank. During the reciprocating linear movement an angle between the crank and the link rod increases, causing a movement of the wiper arm in one direction and decreases, causing a movement of the wiper arm in the opposite direction. When the vehicle wiper device operates between the normal position and the deflected position, the angle between the crank and the link rod is such that forces acting on the crank and the link rod do not damage or block the movement transmission device.

However, in use, it can happen that the wiper blade, and thus wiper arm, achieve unwanted position, here called as a lowered position. The lowered position of the wiper arm is a position below the normal position. Unwanted, lowered position of the wiper arm may be caused by applying external forces to the wiper arm, wiper blade or both. External forces may derive from, e.g. accumulation of snow on the wiper arm. Also an error of electronic control devices may occur, which may result in the lowered position of the wiper arm. The wiper arm may also be subjected to the external forces caused by action of wind. Moreover, the lowered position of the wiper arm may be achieved when the vehicle wiper device operates with high wiper motor speed. When the wiper motor speed is high, inertia forces of the wiper arm with the wiper blade attached are also increased. High inertia forces occur in the movement transmission device, especially when the wiper arm is long, for example in truck cars. Another source of an external force may be any human actions, like pushing down with a hand at least one of the wiper blades, for example during cleaning of a vehicle.

Lowering of the wiper arm acts on the movement transmission devices so that the angle between the crank and the link rod increases. When the angle increases, forces acting on the crank and the link rod significantly increase so that the forces become damaging forces for the movement transmission device. Such damaging forces acting on the movement transmission device cause too high load of the movement transmission device which results in failure of the device.

Further lowering of the wiper arm causes further increasing of the angle between the crank and the link rod up to the position when the crank and the link rod are positioned almost collinear or collinear. When the crank and the link rod are collinear, the angle between the crank and the link rod may increase above 180°, causing that reciprocating linear movement between the crank and the link rod is prevented, since the movement transmission device is blocked, which is highly undesirable. When the movement transmission device is blocked during use of the vehicle wiper device, the device may be damaged, since mutual movement of the crank with respect to the link rod is not possible to perform. A blockage or damage of the movement transmission device causes that the vehicle wiper device stops operating and wiping a windscreen of a vehicle is not possible.

A blocking of the movement transmission device during use of a vehicle is particularly dangerous for users of a vehicle, since the vehicle wiper device are mainly used in poor weather conditions. Damaging or blocking of the wiper device makes driving a vehicle impossible during poor weather conditions.

The vehicle wiper device usually comprises two wiper arms, wherein a first wiper arm is positioned at a driver side and a second wiper arm is positioned at a passenger side of the vehicle. The passenger side is a side of the vehicle at which there is no steering wheel in vehicles for right-hand traffic, which is the right side of the vehicle. A side which is opposed to the passenger side is the driver side. However, the above-mentioned problem usually exists at the passenger side.

United States patent application no. 6 393 653 discloses a windscreen wiper inertia absorption apparatus. The apparatus comprises an energy absorption member, which provides a force in an opposed direction to the movement of the wiper arm. The energy absorption member stores a portion of the inertial energy of the moving wiper arm at at least one end limit position of the wiper arm. The energy absorption means minimize an expansion of the wipe pattern of the wiper arm, particularly at a high speed wiper motor operation. The energy absorption means also reduce an outwipe angle difference between low speed and high speed wiper motor operation.

Document DE 197 44 906 A1 is considered to be the prior art closest to the subject-matter of independent claim 1.

An object of the present invention is to provide a movement transmission device for a vehicle wiper device which operates smoothly, without being blocked or damaged.

Another object of the invention is to provide a movement transmission device which provides wiping operation regardless of external forces acting on the device.

Yet another object of the present invention is to provide a movement transmission device for a vehicle wiper device, which is reliable in every weather conditions.

### DISCLOSURE OF THE INVENTION

To fulfill, at least partially, the above-mentioned objects the present invention provides a movement transmission device for a vehicle wiper device.

A movement transmission device for a vehicle wiper device comprises a pivot shaft housing receiving a pivot shaft. The movement transmission device further comprises a crank having a first end and a second end. The first end of the crank is fixed to the pivot shaft. The second end of the crank is suitable to be linked to a link rod transmitting a movement to the crank. The pivot shaft housing comprises limiting means for limiting the movement of the crank.

The limiting means are configured to contact with the crank such that the rotation of the crank with respect to the link rod is limited to the required range. Limiting the rotation of the crank with respect to the link rod ensures that damaging or blocking of the link rod with respect to the crank is prevented, for example regardless of external forces acting on the movement transmission device.

The limiting means act as mechanical limitation against said forces. When the wiper arm is lowered to the lowered position, the limiting means stop lowering of the wiper arms at the required point, which is usually the normal i.e. rest position. Thus, the limiting means ensure that the vehicle wiper device operates between the normal position and the deflected position. Therefore, the limiting means also ensure that the movement transmission device operates in a correct manner in every weather conditions.

Preferably, the limiting means limit a position of the crank so that a collinear position of the crank with respect to the link rod is prevented.

When the crank and the link rod are positioned collinear there is a high risk that an angle between the crank and the link rod will increase to a value exceeding 180°, causing a blockage of the movement transmission device. Therefore, a limitation of mutual positioning of the crank and the link rod such that the collinear position is prevented ensures that the movement transmission device is not blocked regardless of any external forces or any other loads acting on the device.

Preferably, the limiting means limit a position of the crank so that damaging forces acting on the crank are reduced to a required level.

Reducing forces acting on the movement transmission device to a required level ensures that damaging forces in the movement transmission device are prevented. Thus, wearing of components of the movement transmission device is reduced and higher durability and longer lifetime of the movement transmission device are obtained.

Preferably, the pivot shaft housing is arranged at the passenger side of the vehicle.

The limiting means provided at the pivot shaft housing at passenger side of the vehicle are applicable in most common applications such as passenger cars, since usually at the passenger side there is a risk that the crank and the link rod will be collinear. Providing the limiting means at the passenger side allows to maintain manufacturing costs of the movement transmission device at low level.

Preferably, the pivot shaft housing is arranged at both passenger side and driver side of the vehicle.

A risk of collinear positioning of the crank and the link rod at both sides of the vehicle appears in large vehicles like trucks which have windscreens with large width and small height. Therefore, in such applications there is a necessity of providing the limiting means at both the passenger side and the driver side of the vehicle. Providing the pivot shaft housing with the limiting means at both sides is advantageous since both wiper arms operate in a reliable manner in every weather conditions.

Preferably, the limiting means comprise at least one protrusion for limiting a movement of the crank.

In this preferred embodiment, the at least on protrusion extends from the pivot shaft housing. The protrusion is simple and easy to manufacture. Preferably, the protrusion can be manufactured with the pivot shaft housing in one piece.

According to the invention, the crank comprises at least one projection for contacting the limiting means. The projection increases the durability of the crank. The projection is manufactured with the crank in one piece.

Preferably, the limiting means are made of elastic material.

Preferably, the limiting means are coated with elastic material.

The limiting means made of or coated with elastic material are particularly advantageous since they significantly reduce undesirable noise and vibration while contacting the limiting means with the crank. An elastic material used in the limiting means enhances a comfort of using the vehicle wiper device.

Preferably, the elastic material is rubber.

Rubber has high elastic properties and is suitable for reduce vibration, especially in contact couplings. Thus, forming the limiting means of rubber or coating the limiting means with rubber is particularly advantageous, since it reduces noise and vibration during contact the limiting means with the crank. Furthermore, reducing of vibration and loads in the movement transmission device enhances a durability of the device.

Preferably, the at least one projection is made with the crank in one piece.

The crank with the projection as well as the pivot shaft housing with the limiting means may be manufactured using, for example, metal casting process. Furthermore, the crank with the projection may be manufactured in one piece and the pivot shaft housing with the limiting means may be manufactured in one piece. Manufacturing the components as one part components is particularly advantageous since it reduces a complexity of a construction of the movement transmission device and reduces costs of manufacturing.

### BRIEF DESCRIPTION OF FIGURES

The present invention is described in greater details with reference to accompanying figures, in which:
Fig. 1 is a general view of a vehicle wiper device for wiping a windscreen of a vehicle to which the movement transmission device according to the invention may be applied.
Fig. 2 is a general view of a wiper module comprising a movement transmission device for a vehicle wiper device to which the movement transmission device according to the invention may be applied.
Fig. 3 is a partial perspective view of a movement transmission device known from the prior art.
Fig. 4a and 4b are perspective views of a movement transmission device according to the invention.

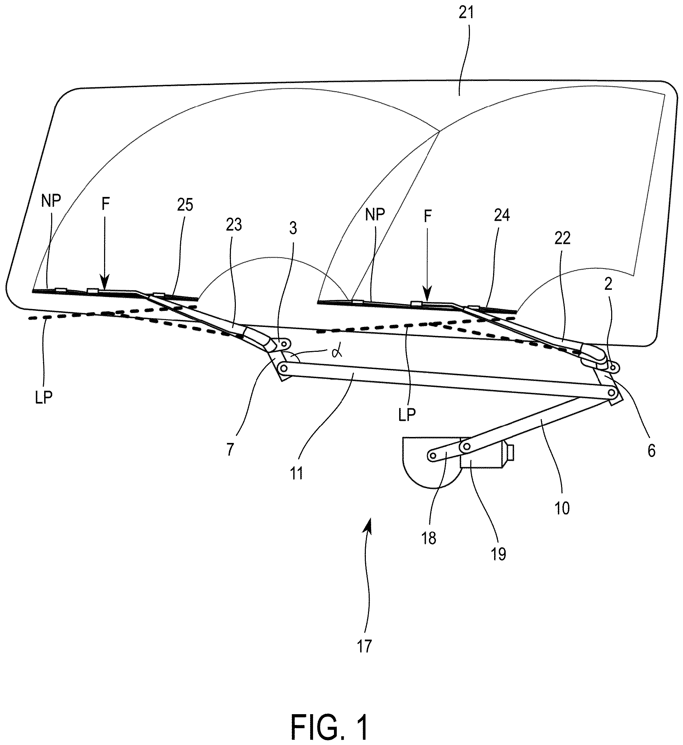

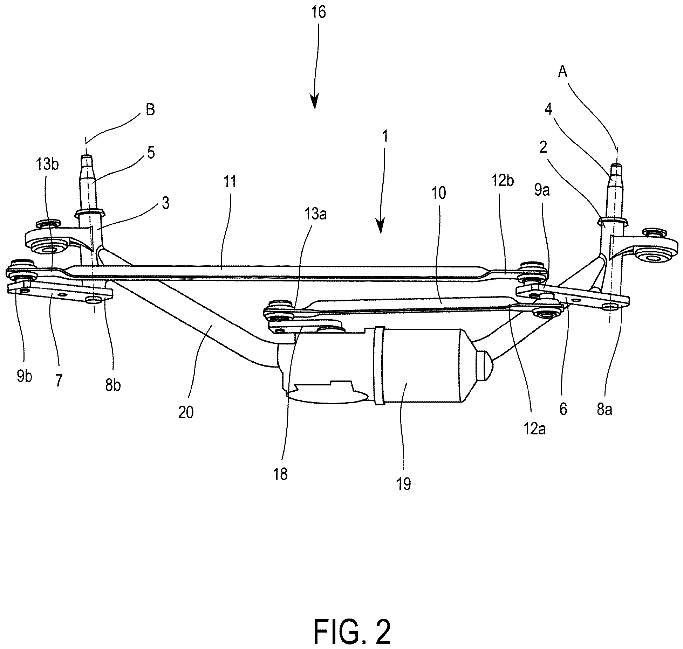

Fig. 1 shows a vehicle wiper device 17 for wiping a windscreen 21 of a vehicle. A vehicle wiper device 17 comprises a wiper module 16 shown in details in fig. 2. The wiper module 16 comprises a movement transmission device 1 which transfers drive from a wiper motor 19 to a first wiper arm 22 and a second wiper arm 23, providing reciprocating movement of the wiper arms 22, 23. A first wiper blade 24 and a second wiper blade 25 are attached, respectively, to the first wiper arm 22 and the second wiper arm 23 for wiping the windscreen 21 of a vehicle. The wiper blades 24, 25 are placed in abutment with the windscreen 21, such that the wiper blades 24, 25 are capable of wiping the windscreen 21 of a vehicle.

As can be seen from fig. 1 the wiper arms 22, 23 may be lowered to the lowered position LP (dashed line), for example as a result of acting external forces F applied to the wiper blades 24, 25 or the wiper arms 22, 23. The lowered position LP of the wiper arms 22, 23 is located below the normal position NP.

Fig. 2 shows in details a wiper module 16 for a vehicle wiper device 17. The wiper module 16 comprises the movement transmission device 1. The movement transmission device 1 comprises a first link rod 10 transferring a drive from a wiper motor 19 to a first crank 6 and via a second link rod 11 to a second crank 7. One end 12a of the first link rod 10 is linked to a second end 9a of the first crank 6. Further, one end 12b of the second link rod 11 is linked to the second end 9a of the first crank 6. The other end 13b of the second link rod 11 is linked to a second end 9b of the second crank 7.

The first wiper arm 22, presented in fig. 1, is fixed to a first pivot shaft 4 and the second wiper arm 23, also presented in fig. 1, is fixed to a second pivot shaft 5. Then, a drive is transferred via the pivot shafts 4, 5 into a reciprocating movement of the first wiper arm 22 and the second wiper arm 23. The first wiper arm 22 rotates about the rotational axis A of the first pivot shaft 4 and the second wiper arm 23 rotates about the rotational axis B of the second pivot shaft 5.

The movement transmission device 1 presented in fig. 2 further comprises a first pivot shaft housing 2 and a second pivot shaft housing 3. The first pivot shaft housing 2 and the second pivot shaft housing 3 support a first pivot shaft 4 and a second pivot shaft 5, respectively. The first pivot shaft 4 has a first rotational axis A around which the first pivot shaft 4 rotates in the first pivot shaft housing 2. The second pivot shaft 5 has the second rotational axis B around which the second pivot shaft 5 rotates in the second pivot shaft housing 3. The first pivot shaft 4 is fixed to the first end 8a of the first crank 6 and the second pivot shaft 5 is fixed to the first end 8b of the second crank 7. The wiper motor 19 is coupled with the movement transmission device 1 via a coupling element 18. The coupling element 18 is linked to the other end 13a of the first link rod 10. The wiper module 16 further comprises a frame tube 20 for supporting the first pivot shaft housing 2, the second pivot shaft housing 3 and the wiper motor 19.

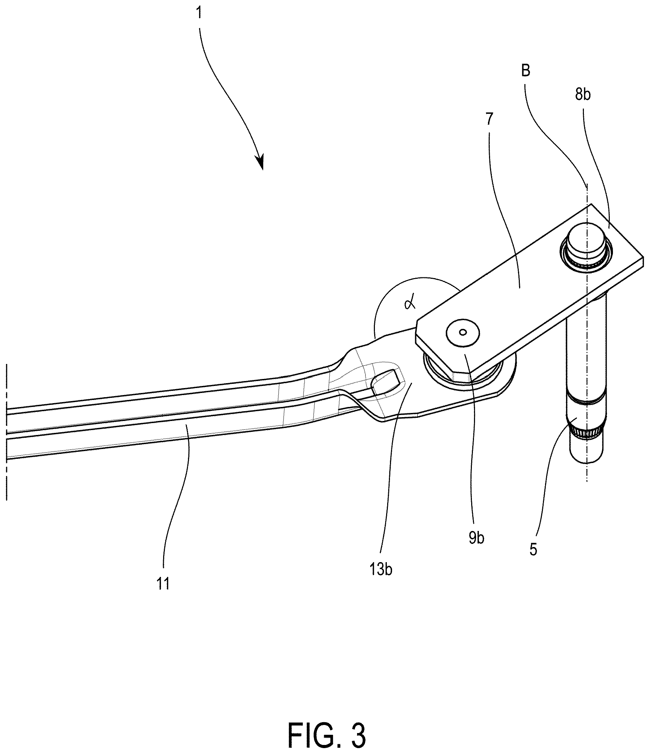

The first link rod 10 and the second link rod 11 driven by the wiper motor 19 perform a reciprocating linear movement. During the reciprocating linear movement an angle between the second crank 7 and the second link rod 11 decreases, causing movement of the wiper arm 23 in one direction and increases, causing movement of the wiper arm 23 in the opposite direction. Said angle is shown in details in fig. 3. The reciprocating linear movement of the second link rod 11 is transferred into a reciprocating movement of the second crank 7. As shown in fig. 3, illustrating state of the art device, a movement of the second link rod 11 towards the second crank 7 causes a rotation of the second crank 7 about the rotational axis B of the second pivot shaft 5. Accordingly, the reciprocating linear movement of the first link rod 10 is transferred into a reciprocating movement of the first crank 6. The first crank 6 rotates about the rotational axis A of the first pivot shaft 4.

Fig. 3 presents a partial perspective view of a movement transmission device 1 of fig. 2 at the passenger side of the vehicle. While starting the operation of the vehicle wiper device 17, the crank 7 is rotated in such a direction, that the wiper arm 23 rises from the normal position NP on the windscreen 21. When the wiper arm 23 achieves the maximum deflected position, the wiper arm 23 descends towards the normal position NP on the windscreen 21. To provide a correct operation of the movement transmission device 1 the angle α decreases during a movement of the link rod 11 towards the crank 7 and increases during a movement of the link rod 11 away from the crank 7. In the state of the art movement transmission device 1, the crank 7 can be rotated with respect to the link rod 11 without limitation.

When the wiper arm 23 is being lowered to the lowered position LP, as shown in fig. 1, the angle α increases and damaging forces acting on the crank 7 and the link rod 11 occur. Moreover, further lowering the wiper arm 23 causes that the crank 7 and the link rod 11 are positioned collinear. Even further lowering of the wiper arm 23 causes that the angle α between the crank 7 and the link rod 11 is over 180°. When the angle α exceeds 180°, the movement transmission device 1 is blocked.

As mentioned above, a risk of increasing the angle α to 180° is between the second crank 7 and the second link rod 11 provided at the passenger side, as shown in fig. 1. This is because the angle α between the first crank 6 and the first link rod 10 provided at the driver side is usually an acute angle.

When the second crank 7 is positioned with the angle α being nearly 180° or being equal 180° (collinear), the second crank 7 may be blocked with respect to the second link rod 11. A relative blockage of the second crank 7 and the second link rod 11 causes that the vehicle wiper device 17 stops operating and wiping the windscreen 21 of a vehicle is not possible.

In fig. 3 the angle α is nearly 180°. The link rod 11 and the crank 7 are positioned almost collinear. At this position, due to damaging forces acting on the movement transmission device 1 there is a high risk of increasing of the angle α above 180°. When the angle α increases above 180°, probability of blockage of the movement transmission device 1 is particularly high, which is very undesirable.

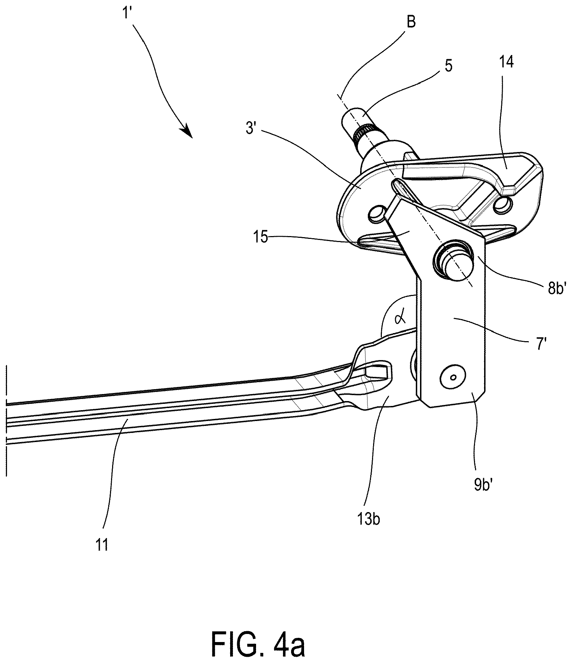

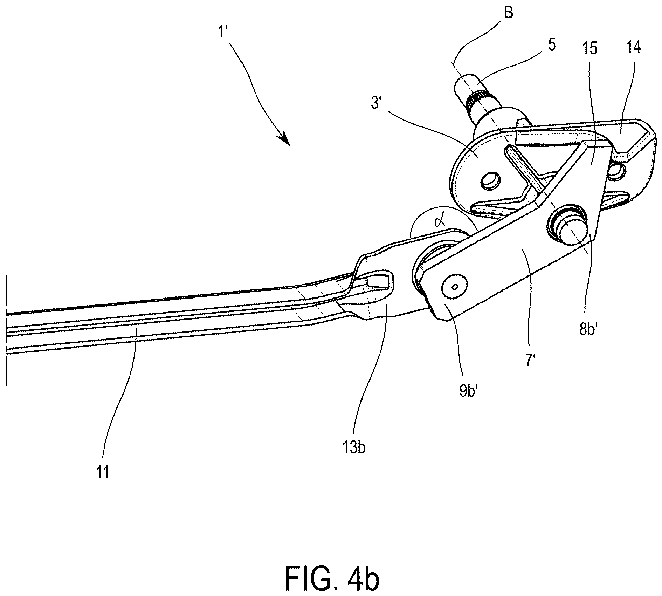

A movement transmission device 1' according to the present invention is presented in fig. 4a and fig. 4b.

Fig. 4a presents a movement transmission device 1' according to the present invention. The movement transmission device 1' comprises a pivot shaft housing 3' receiving a pivot shaft 5. The movement transmission device 1' further comprises a crank 7' having a first end 8b' and a second end 9b'. The first end 8b' of the crank 7' is fixed to the pivot shaft 5. The second end 9b' of the crank 7' is suitable to be linked to a link rod 11 transmitting a movement to the crank 7'. The pivot shaft housing 3' comprises limiting means 14. The limiting means 14 are configured to contact with the crank 7' for limiting the rotational movement of the crank 7'. The limiting means 14 are positioned to limit the maximum angle α allowed between the crank 7' and the link rod 11.

In fig. 4a the movement transmission device 1' according to the present invention is shown in a position, which provides that the angle α is less than 180°, e.g. the angle α is 90°, 100° or 110°, etc.

Fig. 4b presents the movement transmission device 1' in a limiting position according to the present invention. When the angle α reaches a predetermined value, the crank 7' contacts with the limiting means 14. Thereby, further rotation of the crank 7' with respect to the link rod 11 is prevented.

In a preferred embodiment presented in fig. 4a and 4b the limiting means 14 comprise a protrusion extending from the pivot shaft housing 3'. Further, the crank 7' is provided with a projection 15. When the maximum angle α between the crank 7' and the link rod 11 is reached, the protrusion contacts the projection 15 to limit further rotating movement of the crank 7'. Therefore, the protrusion provided on the pivot shaft housing 3' acts as a mechanical stopper for the rotating crank 7'.

The maximum angle α is therefore delimited to a predetermined value. In a preferred embodiment a predetermined value of the maximum angle α is less than 180°. Thus, a collinear positioning of the crank 7' and the link rod 11 is prevented. The maximum angle α which is less than 180° ensures that a blockage of the movement transmission device 1' is prevented.

When the wiper blades 24, 25 are subjected, for example, to the action of external forces F, the limiting means 14 act as mechanical limitation against said forces F. Thus, when the movement transmission device 1' is provided with the limiting means 14, the wiper arms 22, 23 will not be lowered to the lowered position LP (as shown in fig. 1). The limiting means 14 ensure that the movement transmission device 1' operates in a correct manner in every conditions.

In another preferred embodiment a predetermined value of the maximum angle α is 160°. Increasing of the angle α to a value above 160° causes that forces between the crank 7' and the link rod 11 significantly rise. Reducing of the maximum angle α to 160° ensures that forces acting on the movement transmission device 1' are reduced and maintained in a non-damaging level. It is particularly advantageous in case of frequent acting of the limiting means 14. It may happen in case of winter conditions, when snow is often accumulated on the wiper blades 24, 25 pushing them down. Thus, higher durability and longer lifetime of the movement transmission device 1' is obtained.

In a preferred embodiment the limiting means 14 are formed of elastic material, e.g. of a rubber. The limiting means 14 formed of elastic material provide a reduction of an undesirable noise and vibration while contacting the limiting means 14 with the crank 7'. In another preferred embodiment the limiting means 14 are coated with elastic material, e.g. with a rubber.

In yet another preferred embodiment the projection 15 of the crank 7' is formed of elastic material, e.g. of a rubber. The projection 15 of the crank 7' may be also coated with elastic material, e.g. with a rubber. It provides a further reduction of an undesirable noise and vibration while contacting the limiting means 14 with the projection 15 of the crank 7'.

Regardless of the above description, it should be understood that the limiting means 14 may be used at both the passenger side and the driver side of the vehicle wiper device 17 (see fig. 1). For example, trucks or other large vehicles often have windscreens with large width and small height. In such applications there is also a risk of positioning the first crank 6 and the first link rod 10 with the angle α being nearly 180°. Therefore, a necessity of limiting a rotational movement of both cranks 6, 7 may exist. It means that, referring back to fig. 1, the limiting means 14 may be provided at both the first pivot shaft housing 2 and the second pivot shaft housing 3 in order to limit a rotational movement of both the first crank 6 and the second crank 7.

The described invention is susceptible of numerous modifications and variations, all of which are within the scope of the appended claims.

### LIST OF REFERENCE NUMBERS

- (1): movement transmission device
- (2): first pivot shaft housing
- (3): second pivot shaft housing
- (4): first pivot shaft
- (5): second pivot shaft
- (6): first crank
- (7): second crank
- (8a): first end of the first crank
- (9a): second end of the first crank
- (8b): first end of the second crank
- (9b): second end of the second crank
- (10): first link rod
- (11): second link rod
- (12a): one end of the first link rod
- (13a): the other end of the first link rod
- (12b): one end of the second link rod
- (13b): the other end of the second link rod
- (14): limiting means
- (15): projection of the crank
- (16): wiper module
- (17): vehicle wiper device
- (18): coupling element
- (19): wiper motor
- (20): frame tube
- (21): windscreen
- (22): first wiper arm
- (23): second wiper arm
- (24): first wiper blade
- (25): second wiper blade

## Claims

1. A movement transmission device (1') for a vehicle wiper device (17), comprising a pivot shaft housing (3') receiving a pivot shaft (5), a crank (7') having a first end (8b') and a second end (9b'), the first end (8b') of the crank (7') being fixed to the pivot shaft (5) and the second end (9b') of the crank (7') being suitable to be linked to a link rod (11) transmitting a movement to the crank (7'), whereby the pivot shaft housing (3') comprises limiting means (14) for limiting the movement of the crank (7'), **characterized in that** the crank (7') comprises at least one projection (15) for contacting the limiting means (14) made with the crank (7') in one piece.

2. A movement transmission device (1') according to claim 1, **characterized in that** the limiting means (14) limit a position of the crank (7') so that a collinear position of the crank (7') with respect to the link rod (11) is prevented.

3. A movement transmission device (1') according to either one of claims 1 or 2, **characterized in that** the limiting means (14) limit a position of the crank (7') so that damaging forces acting on the crank (7') are reduced to a required level.

4. A movement transmission device (1') according to any one of the preceding claims, **characterized in that** the pivot shaft housing (3') is arranged at the passenger side of the vehicle.

5. A movement transmission device (1') according to any one of the preceding claims, **characterized in that** a pivot shaft housing (3') is arranged at both the passenger side and the driver side of the vehicle.

6. A movement transmission device (1') according to any one of the preceding claims, **characterized in that** the limiting means (14) comprise at least one protrusion for limiting a movement of the crank (7').

7. A movement transmission device (1') according to any one of the preceding claims, **characterized in that** the limiting means (14) are made of elastic material.

8. A movement transmission device (1') according to any one of the preceding claims, **characterized in that** the limiting means (14) are coated with elastic material.

9. A movement transmission device (1') according to either of claims 7 to 8, **characterized in that** the elastic material is rubber.

10. A movement transmission device (1') according to any one of claims 1 to 6, 8, or 9, **characterized in that** the limiting means (14) are made with the pivot shaft housing (3') in one piece.

## Patentansprüche

1. Bewegungsübertragungsvorrichtung (1') für eine Fahrzeugwischervorrichtung (17), umfassend ein Drehwellengehäuse (3'), das eine Drehwelle (5) aufnimmt, eine Kurbel (7') mit einem ersten Ende (8b') und einem zweiten Ende (9b'), wobei das erste Ende (8b') der Kurbel (7') an der Drehwelle (5) befestigt ist und das zweite Ende (9b') der Kurbel (7') dazu geeignet ist, mit einer Verbindungsstange (11) verbunden zu sein, die eine Bewegung auf die Kurbel (7') überträgt, wobei das Drehwellengehäuse (3') Begrenzungsmittel (14) zum Begrenzen der Bewegung der Kurbel (7') umfasst,
**dadurch gekennzeichnet, dass** die Kurbel (7') zumindest einen Vorsprung (15) zum Kontaktieren der Begrenzungsmittel (14) umfasst, der mit der Kurbel (7') einstückig ausgebildet ist.

2. Bewegungsübertragungsvorrichtung (1') nach Anspruch 1, **dadurch gekennzeichnet, dass** die Begrenzungsmittel (14) eine Position der Kurbel (7') begrenzen, so dass eine kollineare Position der Kurbel (7') in Bezug auf die Verbindungsstange (11) verhindert wird.

3. Bewegungsübertragungsvorrichtung (1') nach einem der Ansprüche 1 oder 2, **dadurch gekennzeichnet, dass** die Begrenzungsmittel (14) eine Position der Kurbel (7') begrenzen, so dass auf die Kurbel (7') wirkende schädigende Kräfte auf ein erforderliches Maß reduziert werden.

4. Bewegungsübertragungsvorrichtung (1') nach einem der vorangehenden Ansprüche, **dadurch gekennzeichnet, dass** das Drehwellengehäuse (3') auf der Beifahrerseite des Fahrzeugs angeordnet ist.

5. Bewegungsübertragungsvorrichtung (1') nach einem der vorangehenden Ansprüche, **dadurch gekennzeichnet, dass** sowohl auf der Beifahrerseite als auch auf der Fahrerseite des Fahrzeugs ein Drehwellengehäuse (3') angeordnet ist.

6. Bewegungsübertragungsvorrichtung (1') nach einem der vorangehenden Ansprüche, **dadurch gekennzeichnet, dass** die Begrenzungsmittel (14) zumindest einen Vorsprung zum Begrenzen einer Bewegung der Kurbel (7') umfassen.

7. Bewegungsübertragungsvorrichtung (1') nach einem der vorangehenden Ansprüche, **dadurch gekennzeichnet, dass** die Begrenzungsmittel (14) aus elastischem Material gefertigt sind.

8. Bewegungsübertragungsvorrichtung (1') nach einem der vorangehenden Ansprüche, **dadurch gekennzeichnet, dass** die Begrenzungsmittel (14) mit elastischem Material beschichtet sind.

9. Bewegungsübertragungsvorrichtung (1') nach einem der Ansprüche 7 bis 8, **dadurch gekennzeichnet, dass** das elastische Material Gummi ist.

10. Bewegungsübertragungsvorrichtung (1') nach einem der Ansprüche 1 bis 6, 8 oder 9, **dadurch gekennzeichnet, dass** die Begrenzungsmittel (14) einstückig mit dem Drehwellengehäuse (3') gefertigt sind.

## Revendications

1. Dispositif de transmission de mouvement (1') pour un dispositif d'essuie-glace de véhicule (17), comprenant un logement d'arbre de pivotement (3') qui accueille un arbre de pivotement (5), une manivelle (7') pourvue d'une première extrémité (8b') et d'une seconde extrémité (9b'), la première extrémité (8b') de la manivelle (7') étant fixée à l'arbre de pivotement (5) et la seconde extrémité (9b') de la manivelle (7') étant adaptée pour être reliée à une tige de liaison (11) qui transmet un mouvement à la manivelle (7'), le logement d'arbre de pivotement (3') comprenant des moyens de limitation (14) servant à limiter le mouvement de la manivelle (7'), **caractérisé en ce que** la manivelle (7') comprend au moins une saillie (15) pour contacter les moyens de limitation (14) réalisés avec la manivelle (7') en une pièce.

2. Dispositif de transmission de mouvement (1') selon la revendication 1, **caractérisé en ce que** les moyens de limitation (14) limitent une position de la manivelle (7') de sorte qu'une position colinéaire de la manivelle (7') par rapport à la tige de liaison (11) soit empêchée.

3. Dispositif de transmission de mouvement (1') selon l'une quelconque des revendications 1 ou 2, **caractérisé en ce que** les moyens de limitation (14) limitent une position de la manivelle (7') de sorte que les forces d'endommagement agissant sur la manivelle (7') soient réduites à un niveau requis.

4. Dispositif de transmission de mouvement (1') selon l'une quelconque des revendications précédentes, **caractérisé en ce que** le logement d'arbre de pivotement (3') est disposé du côté passager du véhicule.

5. Dispositif de transmission de mouvement (1') selon l'une quelconque des revendications précédentes, **caractérisé en ce qu'**un logement d'arbre de pivotement (3') est disposé tant du côté passager que du côté conducteur du véhicule.

6. Dispositif de transmission de mouvement (1') selon l'une quelconque des revendications précédentes, **caractérisé en ce que** les moyens de limitation (14) comprennent au moins une saillie pour limiter un mouvement de la manivelle (7').

7. Dispositif de transmission de mouvement (1') selon l'une quelconque des revendications précédentes, **caractérisé en ce que** les moyens de limitation (14) sont réalisés en matériau élastique.

8. Dispositif de transmission de mouvement (1') selon l'une quelconque des revendications précédentes, **caractérisé en ce que** les moyens de limitation (14) sont revêtus de matériau élastique.

9. Dispositif de transmission de mouvement (1') selon l'une quelconque des revendications 7 à 8, **caractérisé en ce que** le matériau élastique est de type caoutchouc.

10. Dispositif de transmission de mouvement (1') selon l'une quelconque des revendications 1 à 6, 8 ou 9, **caractérisé en ce que** les moyens de limitation (14) sont réalisés avec le logement d'arbre de pivotement (3') en une pièce.
